# FASCICULE DE BREVET EUROPEEN

(11) **EP 3 448 582 B1**
(45) Date de publication et mention de la délivrance du brevet: **20.05.2020**
(21) Numéro de dépôt: 17725691.4
(22) Date de dépôt: 28.04.2017
(51) Int. Cl.: B05B 13/04, B25J 11/00, B25J 5/00, B25J 19/02, B25J 19/06, B25J 13/08, B25J 5/04, B05B 13/00, B05B 12/00

(54) **PROCEDE DE TRAITEMENT D'UNE SURFACE, ET AUTOMATE CORRESPONDANT**
VERFAHREN ZUR BEHANDLUNG EINER OBERFLÄCHE UND ENTSPRECHENDE AUTOMATISIERTE VORRICHTUNG
METHOD FOR TREATING A SURFACE AND CORRESPONDING AUTOMATED DEVICE

(30) Priorité: 29.04.2016 FR 1653916
(43) Date de publication de la demande: 06.03.2019
(73) Titulaire: Les Companions, 59000 Lille (FR)
(72) Inventeur: BUSSON, David, 59800 Lille (FR); RENNUIT, Antoine, 59290 Wasquehal (FR)
(74) Mandataire: Cabinet Beau de Loménie
(86) Numéro de dépôt international: PCT/FR2017/051019
(87) Numéro de publication internationale: WO 2017/187106

(56) Documents cités:
- EP-A1- 2 090 506
- EP-A1- 2 394 785
- WO-A1-2007/141320
- JP-A- 2006 320 825

## Description

### Arrière-plan de l'invention

La présente invention concerne un procédé de traitement d'une surface, et un automate correspondant. Plus particulièrement, la présente invention concerne un procédé de mise en peinture d'une surface par un automate assistant.

Il existe déjà des robots destinés à traiter une surface, par exemple la mettre en peinture ou la poncer. De tels robots sont notamment utilisés dans le domaine automobile, pour mettre en peinture les carrosseries des véhicules. Ces robots sont autonomes et sont programmés pour effectuer une série d'opérations sans le contrôle d'un opérateur : ils remplacent alors une ou plusieurs personnes en effectuant les tâches programmées préalablement dans l'ordinateur de commande du robot.

Toutefois, ces robots-peintres, tout comme les autres robots utilisés sur des chaines d'assemblage, sont immobiles sur le sol, et seul le bras tenant l'outil, est mobile : leur domaine d'action est donc géographiquement limité. Par ailleurs, et afin d'éviter les accidents avec d'éventuelles personnes pouvant se trouver à proximité des robots, ceux-ci sont généralement entourés par une zone de sécurité dans laquelle le robot est amené à travailler et dans laquelle les individus ne doivent pas entrer.

Il existe également des robots dans le bâtiment. De tels robots sont notamment utilisés pour travailler à des endroits difficilement accessibles par des individus, voire même interdits. Tel est le cas par exemple lorsque la surface à traiter comprend des plafonds hauts, ou bien est située dans une zone avec des risques de radiations. Un exemple de robot pouvant intervenir dans de telles conditions est notamment décrit dans la demande FR 2 902 038.

On constate alors que le robot est directement commandé par un opérateur, pour traiter la surface à sa place et sous son contrôle. Ainsi, de tels robots ne sont pas autonomes, et nécessitent d'être commandés en continu par un opérateur : l'utilisation d'un tel robot permet alors de faciliter la tâche de l'opérateur, mais requiert toujours sa présence, que ce soit à côté ou à distance du robot. Le robot ne remplace alors pas l'opérateur devant effectuer l'opération, mais agit plutôt comme un outil qui reste sous le contrôle de l'opérateur et qui n'agit pas seul.

Ainsi, le robot ne permet pas d'effectuer un travail en lieu et place d'un individu, mais nécessite toujours une supervision. En particulier, le robot ne peut traiter une surface donnée que grâce aux instructions données par l'opérateur lors du traitement de ladite surface, afin d'adapter les actions effectuées par le robot en temps réel. Un robot selon l'art antérieur est divulgué dans le document EP2090506A1.

### Objet et résumé de l'invention

La présente invention vise à résoudre les différents problèmes techniques énoncés précédemment. En particulier, la présente invention vise à proposer un procédé de traitement d'une surface par un automate, et l'automate correspondant, permettant audit automate de traiter de manière autonome et efficace ladite surface. Par ailleurs, la présente invention vise également à proposer un procédé de traitement d'une surface permettant à un automate d'opérer seul, et en présence de personnes autour de lui.

Ainsi, selon un aspect, il est proposé un procédé de traitement d'une surface à traiter, au moyen d'un automate comportant :
- une embase configurée pour se déplacer sur un sol,
- une plateforme montée sur l'embase et configurée pour se déplacer, au moins en partie, perpendiculairement à l'embase, par exemple verticalement, et
- un moyen de traitement, par exemple un bras, monté sur la plateforme et comportant une extrémité mobile configurée pour traiter une superficie donnée,
   procédé dans lequel :
   a) on divise la surface à traiter en subdivisions de superficie inférieure ou égale à la superficie donnée,
   b) on traite la surface de chaque subdivision par déplacement du moyen de traitement, et
   c) on change de subdivision par déplacement, par exemple translation verticale, de la plateforme et/ou par déplacement de l'embase sur le sol.

Le procédé permet de planifier le traitement de la surface à traiter. Plus particulièrement, le procédé tient compte de la structure de l'automate réalisant le traitement de surface, pour subdiviser la surface à traiter. Ainsi, l'automate comportant une embase se déplaçant sur le sol, c'est-à-dire sensiblement horizontalement, et une plateforme se déplaçant perpendiculairement à l'embase, soit sensiblement verticalement, le procédé prévoit un découpage de la surface à traiter en subdivisions contigües. Les jonctions entre des subdivisions voisines peuvent notamment être verticales ou horizontales, afin que le passage d'une subdivision à une autre puisse se faire, respectivement, par déplacement horizontal de l'embase ou par déplacement vertical de la plateforme. Chaque subdivision correspond à la zone pouvant être traitée par le déplacement seul du moyen de traitement sur la plateforme. Le procédé est donc choisi de manière à optimiser les mouvements de l'automate lors du traitement de la surface. Par ailleurs, le procédé permet le déplacement de l'automate sur le sol, pour lui permettre d'opérer dans n'importe quel endroit, sans avoir une zone d'action limitée, et tout en restant prévisible pour les personnes à proximité grâce à un travail séquencé en subdivisions.

Plus particulièrement, l'automate traite la surface à traiter par portions, et se déplace de subdivision en subdivision : il est ainsi aisé, notamment pour les personnes travaillant à proximité de l'automate, d'anticiper les mouvements de celui-ci, et donc d'agir en conséquence : par exemple en évitant de traiter une surface proche de la subdivision qui sera traitée par l'automate par exemple. L'automate peut alors travailler en collaboration avec les personnes travaillant autour de lui : l'automate effectuant les tâches répétitives et peu techniques, tandis que les professionnels réalisent les travaux plus spécifiques. La planification du travail par l'automate facilite donc le travail simultané de personnes à proximité.

On obtient donc un automate pouvant travailler de manière autonome, sans nécessiter la supervision continue d'une personne. On diminue donc le temps d'intervention de l'opérateur sur l'automate, l'opérateur pouvant à son tour effectuer un traitement de la surface en même temps que l'automate, par exemple en effectuant les travaux nécessitant une technicité ou un savoir-faire particulier tel que le traitement de surfaces spécifiques comme le contour de prises murales, l'arrière de tuyaux, les escaliers, ...

Préférentiellement, l'extrémité mobile du moyen de traitement est configurée pour traiter la surface de chaque subdivision par déplacement parallèlement à la surface de la subdivision à traiter, par exemple dans un plan vertical. L'extrémité mobile du moyen de traitement remplit le rôle de la main d'une personne effectuant le traitement de surface. Dans le cas d'un traitement par projection (de peinture ou d'enduit), cette extrémité est configurée soit pour rester sensiblement toujours à la même distance de la surface à traiter, afin que le traitement effectué par l'extrémité mobile soit uniforme sur toute la surface de la subdivision, soit pour changer la distance la séparant de la surface à traiter, afin d'adapter le traitement à des conditions variables. Dans le cas d'un traitement par contact, par exemple ponçage ou mise en peinture avec un pinceau ou un tampon, cette extrémité est configurée soit pour exercer sensiblement toujours la même force sur la surface à traiter, afin que le traitement effectué par l'extrémité mobile soit uniforme sur toute la surface de la subdivision, soit pour modifier la force exercée sur la surface, afin d'adapter le traitement à des conditions variables.

Préférentiellement, le procédé comporte également, entre les étapes a) et b), une étape a') dans laquelle on détermine un ordre chronologique de traitement desdites subdivisions. Une étape de détermination de l'ordre de traitement des subdivisions permet d'optimiser les déplacements de l'automate et donc la durée du traitement de la surface. Par ailleurs, l'automate peut ainsi limiter des déplacements au sol, notamment lorsqu'il travaille à côté de personnes, afin d'éviter tout contact ou interférence avec leur travail.

Préférentiellement, pendant l'étape b), la plateforme et l'embase restent immobiles, et/ou, pendant l'étape c), le moyen de traitement reste immobile. Les mouvements de l'automate sont délibérément programmés pour être effectués séparément les uns des autres, autrement dit : soit c'est la plateforme et/ou l'embase qui bougent, soit c'est le moyen de traitement, mais pas les deux en même temps. Il devient alors plus facile pour les personnes pouvant travailler autour de l'automate de prévoir et d'anticiper ses mouvements, afin d'agir en conséquence. Par ailleurs, le procédé de traitement de la surface mis en œuvre par l'automate permet également, voire favorise, une décorrélation des mouvements de l'automate.

Préférentiellement, dans l'étape b), le moyen de traitement est déplacé selon une direction verticale et/ou horizontale, et/ou est orienté par rotation au moins autour d'un axe parallèle à la surface à traiter, pendant le traitement de la surface. Comme indiqué précédemment, le moyen de traitement effectue le travail réalisé traditionnellement par la main d'une personne : il est donc prévu de pouvoir imiter autant que possible les mouvements d'une main, afin de reproduire aussi efficacement que possible la technique mise en œuvre par une personne.

Préférentiellement, au moins une des subdivisions de la surface à traiter comprend un contour périphérique délimitant une surface intérieure, et, dans l'étape b), le moyen de traitement est déplacé de manière à traiter d'abord le contour périphérique puis la surface intérieure, de ladite subdivision. Un tel mode de mise en œuvre peut notamment être utilisé lors de mise en peinture : en effet, la méthode du *rechampi* prévoit l'application de peinture selon les bords de la surface à peindre, avant de peindre l'intérieur de la surface. L'automate peut donc appliquer la même technique, au niveau de chaque subdivision, pour obtenir un résultat similaire.

Préférentiellement, pendant l'étape b), on détermine et on contrôle la position du moyen de traitement par rapport à la surface à traiter. Le procédé de commande de l'automate peut comprendre ainsi la commande et la gestion de différents capteurs permettant de vérifier que l'automate effectué correctement le traitement de surface. Un tel contrôle peut notamment s'effectuer sur la distance séparant le moyen de traitement de la surface à traiter.

Préférentiellement, le traitement d'une surface à traiter est une mise en peinture de ladite surface à traiter, un ponçage de ladite surface à traiter et/ou une projection d'enduit sur ladite surface à traiter.

Préférentiellement, la surface à traiter est une surface intérieure d'un immeuble. En particulier, la surface à traiter peut être une surface intérieure d'une maison, d'un immeuble d'habitations ou d'un immeuble de bureaux. Le procédé de traitement concerne ici des surfaces traitées normalement par des opérateurs, car impliquant des contraintes d'accès (taille réduite pour passer à travers les portes ou par les escaliers du bâtiment, poids maximum limité par la structure du bâtiment), de surface (les surfaces intérieures d'un immeuble sont généralement plus petites et plus accessibles par des opérateurs que les surfaces extérieures) et d'alimentation électrique (absence d'installation électrique locale dans un bâtiment en construction) qui conduisent normalement à confier le traitement des surfaces à des opérateurs plutôt qu'à des automates.

Préférentiellement, la surface à traiter peut également être une surface extérieure d'un immeuble. Ainsi, la surface à traiter peut être une façade d'un immeuble, ou bien encore la surface d'une terrasse ou d'un balcon.

En particulier, le traitement de surface peut être un traitement mis en œuvre de manière industrielle et automatisée. Dans ce cas, le procédé peut comprendre une étape de recherche et/ou d'identification de chaque nouvelle surface à traiter, avant les étapes de traitement. Ainsi, l'automate peut être configuré pour identifier une nouvelle surface à traiter sur une chaine de fabrication dans laquelle les surfaces à traiter se translatent devant l'automate, ou bien peut être configuré pour se déplacer, dans une chaine de fabrication statique, d'une surface à traiter à l'autre. Les surfaces à traiter peuvent être : soit toutes identiques, soit de forme connue par l'automate et identifiable dans une base de données de surfaces à traiter, soit de forme quelconque mais dont les caractéristiques (les contours notamment) sont identifiables par l'automate.

Préférentiellement, la surface à traiter comprend un ou plusieurs murs, une ou plusieurs façades, un ou plusieurs plafonds et/ou un ou plusieurs sols. Plus précisément, le travail pouvant être effectué par l'automate ne se limite pas à une unique surface continue, mais peut comporter différentes surfaces identifiées et distinctes les unes des autres.

Selon un autre aspect, l'invention concerne également un automate pour le traitement d'une surface à traiter, comportant :
- une embase configurée pour se déplacer sur un sol,
- une plateforme montée sur l'embase et configurée pour se déplacer, au moins en partie, perpendiculairement à l'embase, par exemple verticalement, et
- un moyen de traitement, par exemple un bras, monté sur la plateforme et comportant une extrémité mobile configurée pour traiter une superficie donnée.

En particulier, l'automate comporte également une unité de commande électronique configurée pour :
a) diviser la surface à traiter en subdivisions de superficie inférieure ou égale à la superficie donnée,
b) traiter la surface de chaque subdivision en commandant le déplacement du moyen de traitement, et
c) changer de subdivision en déplaçant la plateforme, par exemple verticalement, et/ou en déplaçant l'embase sur le sol.

Préférentiellement, l'automate est configuré pour passer par les ouvertures, notamment les portes, d'un immeuble, tel qu'une maison, un immeuble d'habitations ou un immeuble de bureaux. Par exemple, l'automate peut présenter une hauteur inférieure ou égale à 2,5 mètres, de préférence inférieure ou égale à 2 mètres. L'automate peut également présenter une largeur inférieure ou égale à 2 mètres, de préférence inférieure ou égale à 1 mètre. L'automate peut également présenter une longueur inférieure ou égale à 4 mètres, de préférence inférieure ou égale à 2 mètres. Par ailleurs, l'automate peut présenter un poids inférieur ou égal à 500kg, de préférence inférieur ou égal à 250kg. On obtient ainsi un automate compact pouvant circuler à l'intérieur d'un immeuble : c'est-à-dire passer par les portes ou pouvant utiliser un ascenseur.

Par ailleurs, de telles caractéristiques de taille et de poids, permettent également d'utiliser l'automate dans différents environnements très différents, tout en restant opérationnel, notamment grâce à sa maniabilité due à son faible encombrement.

Préférentiellement, l'automate est configuré pour se déplacer en extérieur, par exemple sur la voie publique telle que les trottoirs.

Alternativement, l'automate peut être configuré pour se déplacer dans un environnement industriel, tel une chaîne de fabrication.

Préférentiellement, l'automate comporte également un ou plusieurs capteurs de localisation dans l'espace et par rapport à la surface à traiter, par exemple des capteurs à ultrasons, des capteurs laser, des capteurs de temps de vol, des systèmes vidéo ou bien encore des capteurs avec balises délimitant au moins une partie de la surface à traiter. Les capteurs ont pour but de favoriser le positionnement de l'automate dans son environnement, afin de faciliter l'identification des surfaces à traiter, ainsi que la délimitation desdites surfaces dans l'espace.

L'automate peut ainsi comprendre un système optique de localisation, par exemple une ou plusieurs caméras, telles des caméras positionnées de manière stéréoscopiques, permettant à l'automate de se positionner dans son environnement en trois dimensions. On assure ainsi la précision des déplacements et des opérations effectuées par l'automate.

Préférentiellement, l'automate comprend également des capteurs de présence et est configuré pour limiter, voire éviter, les contacts avec des obstacles potentiels, par exemple avec des personnes. De tels capteurs ont notamment pour but de préserver l'intégrité physique des personnes susceptibles de travailler ou de se trouver à proximité de l'automate. Ainsi, grâce aux différents capteurs, l'automate est configuré pour détecter la présence de telles personnes, et agir en conséquence afin de ne pas les blesser ou les gêner. L'automate devient alors collaboratif, puisqu'il peut venir épauler des personnes dans leur travail, en effectuant le sien à proximité. On entend par « collaboratif » un automate pouvant travailler à proximité d'individus, sans barrière.
Préférentiellement, l'automate comprend également une interface configurée pour permettre la saisie d'instructions par un opérateur et/ou l'affichage d'informations relatives au fonctionnement de l'automate. Une telle interface permet notamment de commander l'automate, et de lui donner les instructions. En particulier, dans la mesure où l'automate est autonome, les instructions lui sont données dans un premier temps, avant de le laisser seul opérer les tâches programmées.

Préférentiellement, une des surfaces intérieures de la pièce est la surface à traiter.

Préférentiellement, l'automate est configuré pour se déplacer à l'intérieur de la pièce.

### Brève description des dessins

L'invention et ses avantages seront mieux compris à la lecture de la description détaillée d'un mode de réalisation particulier, pris à titre d'exemple nullement limitatif et illustré par les dessins annexés sur lesquels :
- la figure **1** est une vue schématique en perspective d'un automate selon la présente invention,
- la figure **2** est un exemple de découpage en subdivisions d'une surface à traiter, par le procédé selon l'invention, et
- la figure **3** est un organigramme d'un exemple de mode de mise en œuvre du procédé de traitement d'une surface selon l'invention.

### Description détaillée de l'invention

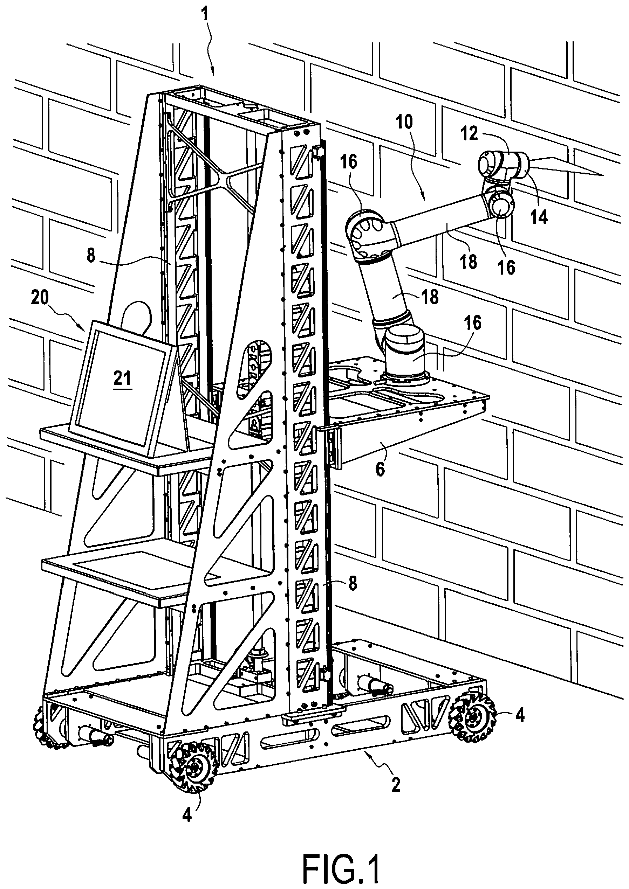

La figure 1 illustre de manière schématique une vue en perspective d'un automate de traitement d'une surface à traiter, selon la présente invention. L'automate 1 comprend ainsi une embase 2 permettant de déplacer l'automate sur le sol, et comportant : des moyens de déplacement, dans le cas présent des roues 4 avantageusement configurées pour ne pas abîmer le sol, par exemple en étant formées ou revêtues par un matériau souple comme un matériau élastique, ainsi qu'un moyen d'entraînement des roues, par exemple un moteur (non représenté). L'embase 2 constitue un châssis pour l'automate 1, et supporte l'ensemble des éléments de l'automate 1 qui sont décrits ci-dessous.

L'automate 1 comporte également une plateforme 6. La plateforme 6 est montée sur l'embase 2, par exemple via deux rails 8 montés sensiblement perpendiculairement sur l'embase 2. La plateforme 6 est configurée pour se déplacer le long des rails 8, c'est-à-dire sensiblement perpendiculairement à l'embase 2, grâce à un moyen d'entraînement (non-représenté), par exemple un moteur. On obtient donc une plateforme 6 pouvant se déplacer par exemple verticalement pour atteindre différentes hauteurs de la surface à traiter.

L'automate 1 comprend par ailleurs un moyen de traitement, dans le cas présent un bras 10. Le bras 10 est monté sur la plateforme 6 et comprend d'une part une extrémité de traitement 12 au niveau de laquelle est monté l'outil de traitement de la surface 14, dans le cas présent une buse de projection de peinture 14, et d'autre part une ou plusieurs articulations 16 reliant une ou plusieurs portions de bras 18. Les articulations 16 permettent de déplacer et d'orienter l'outil de traitement 14 comme souhaité, sur l'ensemble d'une surface de superficie donnée. La superficie dépend notamment de la longueur des portions de bras 18 et de l'amplitude des articulations 16. Par ailleurs, le bras 10 permet également de déplacer l'outil de traitement 14 parallèlement à la surface à traiter, afin d'obtenir un résultat de traitement uniforme.

Enfin, l'automate 1 comporte une unité de commande 20. L'unité de commande 20 peut être montée sur l'embase 2 de l'automate 1, ou bien être située à distance (délocalisée), ou bien être en partie montée sur l'embase 2 et en partie délocalisée. L'unité de commande 20 peut notamment comprendre un écran 21. L'unité de commande 20 permet de commander les différents moyens de l'automate 1, notamment les moyens d'entraînement de l'embase 2, de la plateforme 6 et du bras 10. Les commandes sont notamment déterminées par l'unité de commande 20 en fonction des instructions et des données qui lui sont communiquées.

Plus précisément, l'unité de commande électronique 20 est configurée pour planifier le traitement de la surface à traiter, en tenant compte de la structure de l'automate 1, et en facilitant le travail d'individus à proximité de l'automate 1.

Ainsi, l'unité de commande 20 est configurée pour, dans un premier temps, diviser la surface à traiter en subdivisions de superficie inférieure ou égale à la superficie donnée. Autrement dit, la surface à traiter est subdivisée en portions pouvant être traitée individuellement uniquement par déplacement du bras, la plateforme 6 et l'embase 2 restant immobiles. Puis, l'unité de commande est configurée pour traiter la surface de chaque subdivision en commandant le déplacement du bras 10. Lorsque la subdivision est traitée, l'unité de commande électronique 20 commande alors de changer de subdivision en déplaçant la plateforme 6 verticalement, et/ou en déplaçant l'embase 2 sur le sol.

L'automate 1 travaille donc par subdivision, ou cellule, chaque subdivision correspondant à la surface pouvant être traitée par le seul mouvement du bras 10 de l'automate 1. Puis, l'automate 1 se déplace de subdivision en subdivision, par déplacement de la plateforme 6 et/ou de l'embase 2.

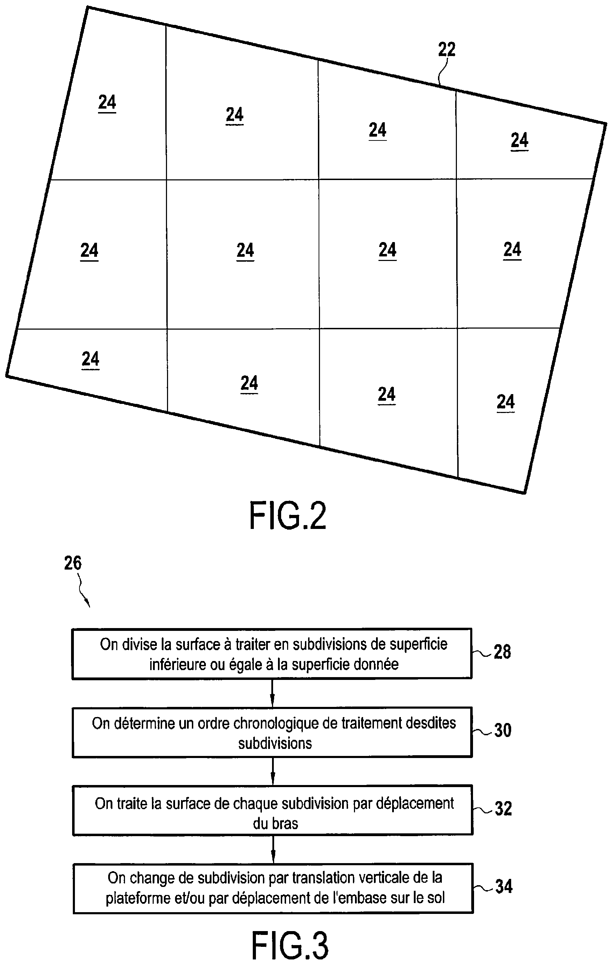

La figure 2 illustre un exemple de planification du travail à réaliser pour traiter l'intégralité d'une surface à traiter 22. Plus précisément, bien que la surface à traiter 22 ne soit pas une surface régulière, celle-ci est considérée par l'unité de traitement électronique 20 comme un ensemble de subdivisions 24 dont les superficies ne sont pas égales entre elles, en raison de l'irrégularité de la surface à traiter 22.

Les subdivisions 24 sont obtenues en opérant un découpage de la surface à traiter 22 selon un quadrillage régulier dont les lignes correspondent aux déplacements de la plateforme 6 et de l'embase 2, dans le cas présent des lignes verticales et horizontales.

Une fois le découpage de la surface à traiter 22 réalisé par l'unité de commande 20, celle-ci peut alors commander l'automate 1 pour traiter successivement lesdites différentes subdivisions 24. Préférentiellement, toutes les subdivisions 24 correspondant à une même position de l'embase 2, c'est-à-dire ne nécessitant le déplacement que du bras 10 et de la plateforme 6, sont traitées successivement. Puis, l'embase 2 est déplacée à une autre position pour traiter successivement toutes les subdivisions 24 correspondantes, et ainsi de suite. On limite de cette façon les déplacements au sol de l'automate 1, ce qui favorise le travail de l'automate 1 avec des individus à proximité.

Au sein de chaque subdivision 24, le traitement appliqué par l'automate 1 peut également être planifié, notamment afin de donner un rendu proche de celui fourni par un professionnel. Par exemple, dans le cas d'un traitement de mise en peinture, l'unité de commande 20 peut être configurée pour commander le traitement d'abord d'un bord ou contour de la surface à traiter 22 : un tel traitement ne s'applique que lorsque la subdivision en question est positionnée au bord de la surface à traiter 22, et n'est pas pertinent si la subdivision en question est entièrement entourée d'autres subdivisions 24. Une telle méthode correspond au *rechampi,* technique consistant à d'abord travailler les contours de la surface avant de travailler le centre.

Une fois le contour réalisé, l'unité de commande 20 peut alors commander le bras 10 de manière à traiter le reste de la superficie de la subdivision 24, c'est-à-dire l'intérieur de la subdivision 24. Pour ce travail, l'unité de commande 20 peut notamment prévoir un déplacement du bras 10 selon une grille horizontale ou verticale, c'est-à-dire traiter l'intérieur de la subdivision 24 en suivant certaines lignes de contour de ladite subdivision 24 (contours horizontaux ou verticaux).

De même, lorsque la subdivision 24 comporte un élément particulier, tel un interrupteur ou une prise électrique, la même technique peut être utilisée : l'unité de commande 20 peut être configurée pour effectuer le traitement le long du contour de l'élément particulier, avant d'effectuer le traitement entre l'élément particulier et le contour de la subdivision 24.

Lorsque toutes les subdivisions 24 sont traitées, l'automate 1 peut alors s'arrêter. Il convient de noter que dans l'exemple décrit précédemment, la surface à traiter 22 est une surface unique. Toutefois, le travail de l'automate 1 selon l'invention ne s'arrête pas à de telles surfaces, mais peut traiter une surface à traiter comportant plusieurs parties distinctes et séparées et les unes des autres. Dans ce cas, chaque partie de la surface à traiter est travaillée comme indiqué précédemment, c'est-à-dire est spécifiquement divisée en subdivisions qui sont travaillées successivement. Lorsqu'une partie est finie, l'unité de commande 20 commande l'embase 2 et/ou la plateforme 6 de manière à se déplacer vers une autre partie non-traitée de la surface à traiter.

Un tel déplacement peut notamment s'opérer, en pratique, d'une part en attribuant à chaque partie distincte de la surface à traiter, un référentiel spécifique de travail utilisé par l'automate 1 pour le traitement de ladite partie distincte de surface, et d'autre part en positionnant, dans un référentiel unique global, les différents référentiels spécifiques de travail entre eux, afin de permettre à l'automate 1 de se déplacer d'une partie distincte de la surface à traiter à une autre partie distincte de la surface à traiter. Par exemple, les différentes parties de surface à traiter peuvent être deux murs d'une pièce, par exemple deux murs contigus mais présentant un angle entre eux, ou bien deux murs parallèles distants se faisant face. Dans les deux cas, l'automate 1 est obligé de se réorienter par rapport à la partie de surface à traiter, lorsqu'il passe d'une partie de surface à une autre, avant d'entamer le traitement de ladite partie de surface.

L'unité de commande 20 peut également permettre à un opérateur de préciser les tâches à accomplir et leurs paramètres, ainsi que prendre connaissance des différents messages d'état ou des alertes détectés par l'unité de commande 20. Ainsi, l'unité de commande 20 peut permettre à l'opérateur de préciser : les paramètres de traitement, par exemple de ponçage (vitesse, effort, ...), ou de peinture (nombre de couches à appliquer, type de peinture, quantité de peinture, motif, entrelacement des couches, recouvrement de deux passes contigües, ...) ; les différentes zones de la surface à traiter, notamment lorsque les paramètres de traitement ne doivent pas être uniformes sur toute la surface à traiter, mais doivent changer selon des données déterminées.

L'unité de commande 20 pourra également servir à définir la surface à traiter, et notamment à la positionner dans l'espace afin que l'automate 1 puisse l'identifier et la délimiter.

Afin de permettre à l'automate 1 de se repérer et de se déplacer dans l'espace pour traiter les différentes surfaces, celui-ci peut comprendre des capteurs. Les capteurs peuvent être de différentes technologies, selon l'amplitude et/ou les précisions des distances concernées. Ainsi, l'automate 1 peut comprendre deux capteurs de distance, par exemple à ultrasons, montés dans le plan de traitement du bras 10 et permettant de déterminer d'une part la distance entre la surface à traiter et l'automate 1, et d'autre part l'angle entre l'axe de l'automate 1 et la surface à traiter. On s'assure ainsi, grâce à ces capteurs, que le bras 10 effectue bien le traitement à la bonne distance de la surface à traiter, et en se déplaçant parallèlement à celle-ci.

Alternativement, lorsque le traitement requiert un contact avec la surface à traiter, par exemple un ponçage, la détermination de la distance à la surface à traiter, et éventuellement l'angle entre l'axe de l'automate 1 et la surface à traiter, pourront être directement évalués par l'outil de traitement, à partir de capteurs de résistance internes utilisés pour contrôler la force appliquée sur la surface à traiter.

L'automate 1 peut également comprendre des capteurs de temps de vol, par exemple laser, pour contrôler la position de l'automate 1 dans son environnement. A cet effet, des balises peuvent également être positionnées à différents endroits identifiés par l'automate 1, afin de garantir qu'il se trouve bien en face de la portion de surface à traiter. De tels capteurs permettent également de s'assurer que les déplacements de l'embase 2 se font parallèlement à la surface à traiter, de manière à ce que les jonctions entre les différentes subdivisions 24 coïncident.

Alternativement, il est également possible de prévoir, en plus des capteurs ou en remplacement des capteurs, une ou plusieurs caméras permettant à l'automate 1 de se positionner dans son environnement en trois dimensions. Ainsi, deux caméras positionnées de manière stéréoscopiques peuvent permettre à l'unité de commande 20 de se situer dans l'espace en déterminant la distance et l'angle séparant l'automate 1 des surfaces à traiter ou des surfaces délimitant son environnement de déplacement. Cela peut également permettre à l'automate 1 de se déplacer d'une partie de surface à traiter à une autre, lorsque celles-ci sont distinctes et séparées l'une de l'autre, comme cela est décrit plus haut.

Dans tous les cas, une étape préalable d'identification de la surface à traiter dans l'environnement détectable par l'automate 1, ainsi qu'une calibration de la position initiale de l'automate 1 dans son environnement, peuvent être nécessaires pour la mise en œuvre des étapes de localisation et de positionnement lors du traitement de la surface à traiter.

Enfin, l'automate 1 peut également comprendre des capteurs de présence, permettant de s'assurer que l'automate 1 peut travailler à proximité d'individus sans les heurter ou les blesser. Par exemple, l'automate 1 peut comprendre des capteurs optiques formant une barrière entre la zone d'évolution de l'automate 1, et plus particulièrement la zone d'évolution de la plateforme 6 et du bras 10, et le reste de la pièce. Ainsi, en cas de détection d'une intrusion d'un objet dans ladite zone d'évolution, la commande de la plateforme 6 et du bras 10 peut être interrompue afin de s'assurer de ne blesser personne ou de ne pas endommager l'automate 1. Par ailleurs, ou alternativement, l'unité de commande 20 peut surveiller la commande des différents moyens de déplacement de l'automate 1, par exemple ceux de l'embase 2 ou de la plateforme 6, afin de détecter une éventuelle obstruction à une commande de déplacement. Dans ce cas, la commande peut être stoppée, voire même inversée, et l'automate 1 peut se mettre en attente jusqu'à ce qu'une personne vienne vérifier les raisons de l'obstruction. On s'assure alors que l'automate 1 peut effectivement évoluer au milieu d'individus sans risquer de les blesser.

La figure 3 illustre un organigramme d'un exemple de procédé 26 de traitement d'une surface à traiter par l'automate 1 décrit précédemment. Le procédé 26 comprend d'abord une première étape 28 dans laquelle on divise la surface à traiter en subdivisions de superficie inférieure ou égale à la superficie donnée. Puis dans une deuxième étape 30, on détermine un ordre chronologique de traitement desdites subdivisions. A l'étape 32, on traite la surface de chaque subdivision par déplacement du bras de l'automate, et à l'étape 34, on change de subdivision par translation verticale de la plateforme et/ou déplacement de l'embase sur le sol.

Ainsi, grâce à l'invention, il devient possible de traiter, à l'aide d'un automate, une surface à traiter, tout en permettant à des individus d'intervenir à proximité de l'automate. En particulier, même si l'automate est autonome, les déplacements de celui-ci sont prévus pour limiter les problèmes avec des personnes travaillant à proximité. L'automate peut donc servir d'assistant au sein d'un chantier, afin d'effectuer notamment les tâches les plus répétitives et sans technicité particulière. Il peut notamment effectuer un traitement de mise en peinture, par exemple par projection de peinture sur la surface, ou bien de ponçage, par exemple par rotation d'un moyen abrasif à la surface à traiter, voire l'application d'enduit, par exemple par projection.

## Revendications

1. Procédé de traitement (26) d'une surface à traiter, au moyen d'un automate (1) comportant :
- une embase (2) configurée pour se déplacer sur un sol,
- une plateforme (6) montée sur l'embase et configurée pour se déplacer, au moins en partie, perpendiculairement à l'embase (2), par exemple verticalement, et
- un moyen de traitement (10), par exemple un bras, monté sur la plateforme (6) et comportant une extrémité mobile (12) configurée pour traiter une superficie donnée,
procédé dans lequel : **caractérisé en ce que**
a) on divise (28) la surface à traiter (22) en subdivisions (24) de superficie inférieure ou égale à la superficie donnée, les subdivisions étant obtenues par découpage de la surface à traiter (22) selon un quadrillage régulier dont les lignes correspondent aux déplacements de la plateforme (6) et de l'embase (2),
a') on détermine (30) un ordre chronologique de traitement desdites subdivisions (24),
b) on traite (32) la surface de chaque subdivision (24) par déplacement du moyen de traitement (10), et
c) on change (34) de subdivision (24) par déplacement, par exemple translation verticale, de la plateforme (6) et/ou par déplacement de l'embase (2) sur le sol.

2. Procédé de traitement (26) selon la revendication 1, dans lequel l'extrémité mobile (12) du moyen de traitement (10) est configurée pour traiter la surface de chaque subdivision (24) par déplacement parallèlement à la surface de la subdivision à traiter, par exemple dans un plan vertical.

3. Procédé de traitement (26) selon l'une quelconque des revendications précédentes, dans lequel, pendant l'étape b), la plateforme (6) et l'embase (2) restent immobiles, et/ou dans lequel, pendant l'étape c), le moyen de traitement (10) reste immobile.

4. Procédé de traitement (26) selon l'une quelconque des revendications précédentes, dans lequel, dans l'étape b), le moyen de traitement (10) est déplacé selon une direction verticale et/ou horizontale, et/ou est orienté par rotation au moins autour d'un axe parallèle à la surface à traiter, pendant le traitement de la surface.

5. Procédé de traitement (26) selon l'une quelconque des revendications précédentes, dans lequel au moins une des subdivisions (24) de la surface à traiter (22) comprend un contour périphérique délimitant une surface intérieure, et dans lequel, dans l'étape b), le moyen de traitement (10) est déplacé de manière à traiter d'abord le contour périphérique puis la surface intérieure, de ladite subdivision (24).

6. Procédé de traitement (26) selon l'une quelconque des revendications précédentes, dans lequel, pendant l'étape b), on détermine et on contrôle la position du moyen de traitement (10) par rapport à la surface à traiter.

7. Procédé de traitement (26) selon l'une quelconque des revendications précédentes, dans lequel le traitement d'une surface à traiter est une mise en peinture de ladite surface à traiter, un ponçage de ladite surface à traiter et/ou une projection d'enduit sur ladite surface à traiter.

8. Procédé de traitement (26) selon l'une quelconque des revendications précédentes, dans lequel la surface à traiter (22) comprend un ou plusieurs murs, une ou plusieurs façades, un ou plusieurs plafonds et/ou un ou plusieurs sols.

9. Procédé de traitement (26) selon l'une quelconque des revendications précédentes, dans lequel la surface à traiter est une surface intérieure d'un immeuble, par exemple une surface intérieure d'une maison, d'un immeuble d'habitations ou d'un immeuble de bureaux, ou bien une surface extérieure d'un immeuble.

10. Procédé de traitement (26) selon l'une quelconque des revendications précédentes, mis en œuvre de manière industrielle et automatisée, dans lequel le procédé comprend également une étape de recherche et/ou d'identification de chaque nouvelle surface à traiter, avant l'étape a).

11. Automate (1) pour le traitement d'une surface à traiter, comportant :
- une embase (2) configurée pour se déplacer sur un sol,
- une plateforme (6) montée sur l'embase et configurée pour se déplacer, au moins en partie, perpendiculairement à l'embase, par exemple verticalement, et
- un moyen de traitement (10), par exemple un bras, monté sur la plateforme (6) et comportant une extrémité mobile (12) configurée pour traiter une superficie donnée, **caractérisé en ce que** l'automate (1) comporte également une unité de commande électronique (20) configurée pour :
a) diviser la surface à traiter en subdivisions (24) de superficie inférieure ou égale à la superficie donnée, les subdivisions étant obtenues par découpage de la surface à traiter (22) selon un quadrillage régulier dont les lignes correspondent aux déplacements de la plateforme (6) et de l'embase (2),
a') déterminer (30) un ordre chronologique de traitement desdites subdivisions (24),
b) traiter la surface de chaque subdivision (24) en commandant le déplacement du moyen de traitement (10), et
c) changer de subdivision (24) en déplaçant la plateforme (6), par exemple verticalement, et/ou en déplaçant l'embase (2) sur le sol.

12. Automate (1) selon la revendication 11, comprenant également des capteurs de présence et configuré pour limiter, voire éviter, les contacts avec des obstacles potentiels, par exemple avec des personnes.

13. Automate (1) selon la revendication 11 ou 12, comprenant une ou plusieurs caméras, par exemple deux caméras positionnées de manière stéréoscopiques, permettant à l'automate (1) de se positionner dans son environnement en trois dimensions.

14. Automate (1) selon l'une quelconque des revendications 11 à 13, présentant : une hauteur inférieure ou égale à 2,5 mètres, de préférence inférieure ou égale à 2 mètres, une largeur inférieure ou égale à 2 mètres, de préférence inférieure ou égale à 1 mètre, une longueur inférieure ou égale à 4 mètres, de préférence inférieure ou égale à 2 mètres, et/ou un poids inférieur ou égal à 500 kg, de préférence inférieur ou égal à 250 kg.

## Patentansprüche

1. Verfahren zur Behandlung (26) einer zu behandelnden Oberfläche mittels einer automatisierten Vorrichtung (1), aufweisend:
- eine Basis (2), die konfiguriert ist, um sich auf einem Boden zu verlagern,
- eine Plattform (6), die auf der Basis angebracht und konfiguriert ist, um sich mindestens teilweise senkrecht zur Basis (2), beispielsweise vertikal, zu verlagern, und
- ein Behandlungsmittel (10), beispielsweise einen Arm, der auf der Plattform (6) angebracht ist und ein bewegliches Ende (12) aufweist, das konfiguriert ist, um eine bestimmte Fläche zu behandeln,
wobei der Verfahren **dadurch gekennzeichnet ist, dass**
a) die zu behandelnde Oberfläche (22) in Parzellen (24) mit einer Fläche unterteilt werden (28), die kleiner oder gleich der gegebenen Fläche ist, wobei die Parzellen durch Untergliedern der zu behandelnden Oberfläche (22) gemäß einem regelmäßigen Karomuster erhalten werden, dessen Linien den Verlagerungen der Plattform (6) und der Basis (2) entsprechen,
a') eine chronologische Reihenfolge der Behandlung der Parzellen (24) bestimmt wird (30),
b) die Oberfläche jeder Parzelle (24) durch Verlagern des Behandlungsmittels (10) behandelt wird (32), und
c) die Parzelle (24) durch Verlagern, beispielsweise vertikale Translation, der Plattform (6) und/oder durch Verlagern der Basis (2) auf dem Boden gewechselt wird (34).

2. Behandlungsverfahren (26) nach Anspruch 1, wobei das bewegliche Ende (12) des Behandlungsmittels (10) konfiguriert ist, um die Oberfläche jeder Parzelle (24) durch Verlagern parallel zur Oberfläche der zu behandelnden Parzelle zu behandeln, beispielsweise in einer vertikalen Ebene.

3. Behandlungsverfahren (26) nach einem der vorangehenden Ansprüche, wobei bei Schritt b) die Plattform (6) und die Basis (2) unbewegt bleiben und/oder wobei bei Schritt c) das Behandlungsmittel (10) unbewegt bleibt.

4. Behandlungsverfahren (26) nach einem der vorangehenden Ansprüche, wobei in Schritt b) das Behandlungsmittel (10) während der Behandlung der Oberfläche gemäß einer vertikalen und/oder horizontalen Richtung verlagert und/oder durch Rotation mindestens um eine Achse, die parallel zu der zu behandelnden Oberfläche ist, ausgerichtet wird.

5. Behandlungsverfahren (26) nach einem der vorangehenden Ansprüche, wobei mindestens eine der Parzellen (24) der zu behandelnden Oberfläche (22) eine periphere Kontur umfasst, die eine innere Oberfläche begrenzt und wobei in Schritt b) das Behandlungsmittel (10) derart verlagert wird, dass zunächst die periphere Kontur und dann die innere Oberfläche der Parzelle (24) behandelt wird.

6. Behandlungsverfahren (26) nach einem der vorangehenden Ansprüche, wobei bei Schritt b) die Position des Behandlungsmittels (10) in Bezug auf die zu behandelnde Oberfläche bestimmt und gesteuert wird.

7. Behandlungsverfahren (26) nach einem der vorangehenden Ansprüche, wobei die Behandlung einer zu behandelnden Oberfläche ein Anstreichen der zu behandelnden Oberfläche, ein Grobschleifen der zu behandelnden Oberfläche und/oder das Projizieren eines Verputzes auf die zu behandelnde Oberfläche ist.

8. Behandlungsverfahren (26) nach einem der vorangehenden Ansprüche, wobei die zu behandelnde Oberfläche (22) eine oder mehrere Wände, eine oder mehrere Fassaden, eine oder mehrere Decken und/oder einen oder mehrere Böden umfasst.

9. Behandlungsverfahren (26) nach einem der vorangehenden Ansprüche, wobei die zu behandelnde Oberfläche eine innere Oberfläche eines Gebäudes, beispielsweise eine innere Oberfläche eines Hauses, eines Wohn- oder Bürogebäudes oder auch eine äußere Oberfläche eines Gebäudes ist.

10. Behandlungsverfahren (26) nach einem der vorangehenden Ansprüche, durchgeführt industriell und automatisiert, wobei das Verfahren ebenfalls einen Schritt des Suchens und/oder des Findens jeder neuen, zu behandelnden Oberfläche vor Schritt a) umfasst.

11. Automatisierte Vorrichtung (1) für die Behandlung einer zu behandelnden Oberfläche, aufweisend:
- eine Basis (2), die konfiguriert ist, um sich auf einem Boden zu verlagern,
- eine Plattform (6), die auf der Basis angebracht und konfiguriert ist, um sich mindestens teilweise senkrecht zur Basis, beispielsweise vertikal, zu verlagern, und
- ein Behandlungsmittel (10), beispielsweise einen Arm, der auf der Plattform (6) angebracht ist und ein bewegliches Ende (12) aufweist, das konfiguriert ist, um eine bestimmte Fläche zu behandeln,
**dadurch gekennzeichnet, dass** die automatisierte Vorrichtung (1) ebenfalls eine elektronische Steuereinheit (20) aufweist, die konfiguriert ist, um:
a) die zu behandelnde Oberfläche in Parzellen (24) mit einer Fläche zu unterteilen, die kleiner oder gleich der gegebenen Fläche ist, wobei die Parzellen durch Untergliedern der zu behandelnden Oberfläche (22) gemäß einem regelmäßigen Karomuster erhalten werden, dessen Linien den Verlagerungen der Plattform (6) und der Basis (2) entsprechen,
a') eine chronologische Reihenfolge der Behandlung der Parzellen (24) zu bestimmen (30),
b) die Oberfläche jeder Parzelle (24) durch Steuern der Verlagerung des Behandlungsmittels (10) zu behandeln, und
c) die Parzelle (24) durch Verlagern, beispielsweise vertikal, der Plattform (6) und/oder durch Verlagern der Basis (2) auf dem Boden zu wechseln.

12. Automatisierte Vorrichtung (1) nach Anspruch 11, umfassend ebenfalls Präsenzsensoren und konfiguriert, um die Kontakte mit potentiellen Hindernissen, beispielsweise mit Personen, zu begrenzen, ja sogar zu vermeiden.

13. Automatisierte Vorrichtung (1) nach Anspruch 11 oder 12, umfassend eine oder mehrere Kameras, beispielsweise zwei Kameras, die stereoskopisch positioniert sind, die es der automatisierten Vorrichtung (1) erlauben, sich in ihrer dreidimensionalen Umgebung zu positionieren.

14. Automatisierte Vorrichtung (1) nach einem der Ansprüche 11 bis 13, aufweisend: eine Höhe von unter oder gleich 2,5 Metern, vorzugsweise von unter oder gleich 2 Metern, eine Breite von unter oder gleich 2 Metern, vorzugsweise von unter oder gleich 1 Meter, eine Länge von unter oder gleich 4 Metern, vorzugsweise von unter oder gleich 2 Metern, und/oder ein Gewicht von unter oder gleich 500 kg, vorzugsweise von unter oder gleich 250 kg.

## Claims

1. A treatment method (26) for treating a surface for treatment by means of an automaton (1) comprising:
- a base (2) configured to move over ground;
- a platform (6) mounted on the base and configured to move, at least in part, perpendicularly to the base (2), e.g. vertically; and
- treatment means (10), e.g. an arm, mounted on the platform (6) and including a movable end (12) configured to treat a given area;
the method being **characterized in that** it comprises:
a) subdividing (28) the surface for treatment (22) into subdivisions (24) of area less than or equal to the given area, the subdivisions being obtained by splitting up the surface for treatment (22) with a regular rectangular grid with lines corresponding to movements of the platform (6) and of the base (2);
a') determining (30) a chronological order for treating said subdivisions (24);
b) treating (32) the surface of each subdivision (24) by controlling movements of the treatment means (10); and
c) changing (34) subdivision (24) by moving the platform (6), e.g. in vertical translation, and/or by moving the base (2) over the ground.

2. A treatment method (26) according to claim 1, wherein the movable end (12) of the treatment means (10) is configured to treat the surface of each subdivision (24) by moving parallel to the surface of the subdivision for treatment, e.g. in a vertical plane.

3. A treatment method (26) according to any preceding claim, wherein, during step b), the platform (6) and the base (2) remain stationary, and/or wherein, during step c), the treatment means (10) remain stationary.

4. A treatment method (26) according to any preceding claim, wherein, in step b), the treatment means (10) are moved in a vertical and/or horizontal direction, and/or they are steered by turning about at least one axis parallel to the surface for treatment, while treating the surface.

5. A treatment method (26) according to any preceding claim, wherein at least one of the subdivisions (24) of the surface for treatment (22) has a peripheral outline defining an inside area, and wherein, in step b), the treatment means (10) are moved so as to begin by treating the peripheral outline of said subdivision (24), followed by treating its inside area.

6. A treatment method (26) according to any preceding claim, wherein, during step b), the position of the treatment means (10) relative to the surface for treatment is determined and monitored.

7. A treatment method (26) according to any preceding claim, wherein the treatment of a surface for treatment is painting said surface for treatment, sanding said surface for treatment, and/or spraying a plaster coating on said surface for treatment.

8. A treatment method (26) according to any preceding claim, wherein the surface for treatment (22) comprises one or more walls, one or more facades, one or more ceilings, and/or one or more floors.

9. A treatment method (26) according to any preceding claim, wherein the surface for treatment is an inside surface in a building, e.g. an inside surface in a house, in an apartment building, or in an office building, or indeed an outside surface of a building.

10. A treatment method (26) according to any preceding claim, performed in industrial and automated manner, in which the method also includes a step of searching for and/or identifying each new surface for treatment, prior to step a).

11. An automaton (1) for treating a surface for treatment, the automaton comprising:
- a base (2) configured to move over ground;
- a platform (6) mounted on the base and configured to move, at least in part, perpendicularly to the base, e.g. vertically; and
- treatment means (10), e.g. an arm, mounted on the platform (6) and including a movable end (12) configured to treat a given area;
**characterized in that** the automaton (1) also comprises an electronic control unit (20) configured to:
a) subdivide the surface for treatment into subdivisions (24) of area less than or equal to the given area, the subdivisions being obtained by splitting up the surface for treatment (22) in a regular rectangular grid having lines that correspond to movements of the platform (6) and of the base (2) ;
a') determine (30) a chronological order for treating said subdivisions (24);
b) treat the surface of each subdivision (24) by controlling movements of the treatment means (10); and
c) change subdivision (24) by moving the platform (6), e.g. vertically, and/or by moving the base (2) over the ground.

12. An automaton (1) according to claim 11, also including presence sensors and configured to limit, or even avoid, contacts with potential obstacles, e.g. with people.

13. An automaton (1) according to claim 11 or claim 12, including one or more cameras, e.g. two cameras that are positioned stereoscopically, enabling the automaton (1) to position itself in three dimensions in its surroundings.

14. An automaton (1) according to any one of claims 11 to 13, presenting: a height less than or equal to 2.5 m, preferably less than or equal to 2 m, a width less than or equal to 2 m, preferably less than or equal to 1 m, a length less than or equal to 4 m, preferably less than or equal to 2 m, and/or a weight less than or equal to 500 kg, preferably less than or equal to 250 kg.
